# EUROPEAN PATENT APPLICATION

(11) **EP 1 241 909 A1**
(43) Date of publication of application: **18.09.2002**
(21) Application number: 01610103.2
(22) Date of filing: 28.09.2001
(51) Int. Cl.: H04Q 7/38, G01S 5/00

(54) **Method and computer readable medium for a program for location determination of a mobile terminal**

(30) Priority: 13.03.2001 DK 200100419
(71) Applicant: TELEFONAKTIEBOLAGET L M ERICSSON (publ), 126 25 Stockholm (SE)
(72) Inventor: Wätjen, Rasmus, 2800 Lyngby (DK)
(74) Representative: Wittrup, Flemming

(57) **Abstract**

A method for deciding on the location of a mobile terminal communicating on occasion with a number of base stations having respective predefined antenna coverage zones (Z1, Z2) said method comprising the steps of registering a unique mobile terminal number and an identification number of the base station occasionally communicating with the mobile terminal, comparing the registered data with previously registered data and if the zone number is new Lhen the old zone number is replaced by the new zone number, and dedicating the zone number to a predetermined area (1) of location.

## Description

The invention relates to a method for location determination of a mobile terminal by means of radio connections which are controlled by a common server.

Many techniques are being considered to provide automatic location capability. One technique being considered involves measuring the time difference of arrival of signals from a number of cell sites. These signals are triangulated to extract location information. Unfortunately, this technique requires a high concentration of cell sites and/or an increase in the transmission power of the sites to be effective. This is due to the fact that in a typical CDMA system, each telephone transmits with only enough signal power to reach the closest cell site. As triangulation requires communication with at least three sites, the concentration of cell sites would have to be increased or the signal power of each wireless unit would have to be increased.

In any event, each alternative has significant drawbacks. An increase in the number of cell sites would be too costly. Increases in signal power would add to the weight and cost of each wireless unit and increase the likelihood of interference between wireless users. In addition, the triangulation approach does not appear to offer the accuracy required by the FCC mandate.

Another approach being considered involves the addition of GPS (Global Positioning System) functionality to the cellular telephone. Although this approach would add significant cost and weight to the wireless unit, require a line-of-sight to four satellites, and would be somewhat slow, nevertheless, it is the most accurate approach to support location services. A drawback of these known systems is also that it is undistinguishable whether a mobile unit is close to the one or the opposite side of a partition wall.

An example of a technique using propagation delay times is known from WO 99/04517, and WO 99/47943 discloses a technique where two GPS satellites are sufficient. However, GPS-based location determination is not very suitable in buildings or in streets with tall buildings because of satellite drop-out. WO 00/50519 discloses a mobile computer seeking to determine its location in a building by detecting the signal strength of one or more wireless base stations placed at known locations throughout the building. The signal strength may vary much inside a building because of movement of people and things, and it is not possible to determine the position solely on the basis of signal strength measurements. It is necessary to store a great table in a central system where the table empirically links signal strengths and location.

The object of the invention is to provide a method which allows very precise determination of the location of a mobile unit. Specifically it must be possible to determine with certainty whether the mobile unit is present on one or the other side of a partition wall perhaps just 10 cm thick. And the method must also be capable of being used in radio-dead spaces which find ever greater application.

This object is achieved by providing at least one pair of different radio zones closely spaced from each other so that distinct directional information transversely to a boundary between the pair of radio zones is provided upon recording of the movements of the mobile terminal in the zones.

The position of said pair of radio zones is well-known and is stored in the server, and the location determination is based upon whether the mobile unit has moved in one or the opposite direction transversely to a boundary between the two zones of the pair. According to the invention, additional reliability of the location determination is achieved, because the two different radio zones of the pair are in contact with the mobile unit prior to the location determination. More particularly, the mobile unit is defined to be present at the first side of the boundary of the radio zones if contact has first been established with the mobile unit via the second radio zone and later via the first radio zone. The mobile unit is defined to be at the second side, opposite relative to the first, of the boundary between the pair of radio zones if contact has first been established with the mobile unit via the first radio zone and later via the second radio zone.

This gives a very reliable location determination, and this is achieved in an inexpensive manner as the communication is preferably based on near field radio contact e.g. in accordance with the industrial standard called Bluetooth.

The invention is interesting for many fields of applications. First, the invention may be applied to determine whether a person carrying the mobile unit is present inside or outside a conference room. It will be appreciated that it is sufficient to provide radio zones around the entries to the room, there being no need to erect antennas where the building parts physically restrict the freedom of movement of the persons.

According to the invention it is possible to determine with complete certainty whether a mobile unit is present on one or the other side of a just 10 cm thick partition wall. This will be completely impossible with the known systems.

Typically, a pair of radio zones will be arranged at their respective sides of an entry, but in case of a corridor that connects two rooms it may be sufficient to arrange the zones of the pair at their respective ends of the corridor. Hereby, it will also be appreciated that traffic supervision may be provided by arranging a pair of different radio zones at strategically selected places in a road system. A further example of the use of the invention might be in connection with container terminals for automatic recording of the movement of the containers, each of said containers being equipped with a mobile unit.

Each of the individual radio zones may be extended by using a larger number of antennas or by the use of leaking cables. For example, it is possible in a large room with particularly many people to define some cells in the room and to delimit these cells by means of respective pairs of different radio zones. It is hereby much easier to find a person who would otherwise be impossible to find in a crowd of people.

It is noted that the mobile unit will be out of contact with the radio zones for a longer or shorter period of time. Only when the unit gets within the near field of the antennas connected to the server will communication take place, and the server will be updated accordingly. This allows it to be defined whether the mobile unit is present on one or the other side of a boundary area between a pair of associated radio zones.

In one application, there may be a plurality of pairs of radio zones all of which are connected to the common server, whereby the server can determine where the mobile unit is located, it being possible to obtain a position which is based on the knowledge of where the different boundaries between the pairs of radio zones are located in e.g. a building. Errors, if any, in the position determination may be found by storing a table of previous positions in the server, and errors can also be obviated by supplementing the location determination according to the invention with other known location determination methods, such as signal strength measurements.

In a preferred embodiment, the mobile unit is a mobile telephone which is equipped with a Bluetooth communications channel. This means that the costs of establishing the location determination are solely related to the establishment of antennas and a server in a building or elsewhere. This may also mean that the method of the invention is competitive for traffic supervision where GPS or passive tags are widely used.

The invention also comprises a computer readable medium for storing a program enabling a computer to decide on the location of a mobile terminal based on near field communication with at least two base stations. The medium can be the internet, a CD-rom, a chip and the invention also covers a location system comprising such a medium.

The invention will be explained more fully by the following description of some embodiments with reference to the drawing, in which
figure 1 shows a basic sketch of the mode of operation according to the invention,
figure 2 shows a first use of the invention,
figure 3 shows a flow chart for explaining the mode of operation according to figure 1, while
figures 4-6 show various other uses of the invention.

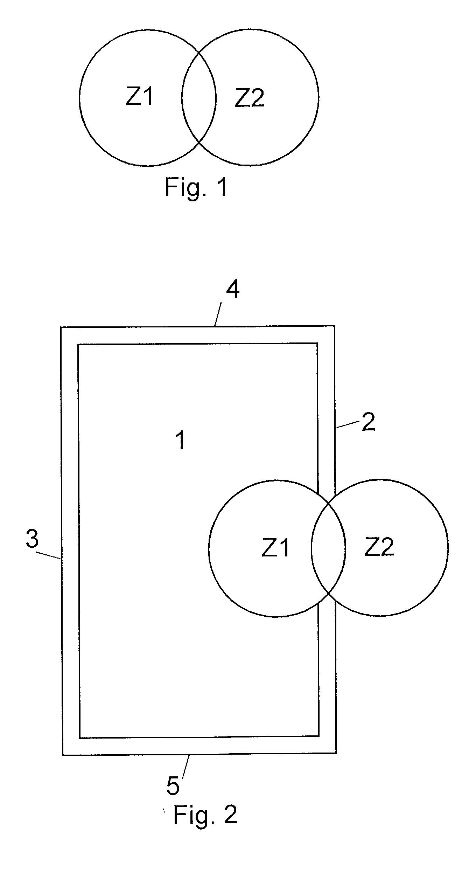

Figure 1 shows two zones, zone 1 and zone 2, of antenna coverage. The respective antennas and receiver parts of the zones are connected to radio communications equipment known per se to make it possible to communicate with a mobile terminal, which may occasionally be present within the zones. Preferably, short-range wireless communication is involved, and in a preferred embodiment a Bluetooth wireless communications standard is used. Other communications forms are also possible according to the invention.

Before the mode of operation will be explained in detail, a first use will be described first with reference to figure 2.

Figure 2 shows a room 1, e.g. a conference room which is defined by some walls 2-5. The wall 2 includes a door opening, and antenna zones Z1 and Z2 are arranged around the door opening as described in connection with figure 1. According to the invention, distinct directional information may be obtained in the door opening, i.e. whether a person has entered the room 1 or has left the room 1. With the system according to the invention it is not necessary to have radio communication all the time. Only when the person passes the door opening will it be detected with certainty because of the use of two adjacent zones.

It is hereby possible to determine where e.g. the participants are present. If a person carrying a mobile telephone leans against either the internal or the external side of the lightweight partition wall 3, the signal conditions will be so uniform on both sides of the wall that the known systems cannot detect whether the person is within or outside the room 1. This drawback is overcome by the invention, which allows it to be determined with certainty whether the person has passed the door in an inward direction or an outward direction.

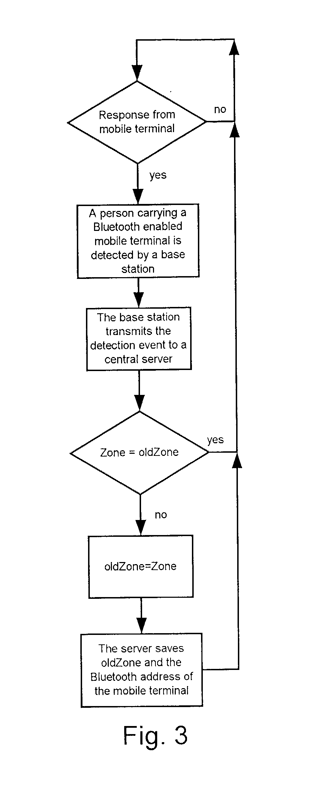

As has previously been mentioned, the flow chart in figure 3 shows at the top that in a typical use it is just necessary to communicate rarely to achieve a location determination. The system according to the invention, which appears from the example in figure 1, is mostly in a standby position and checks whether communication is going on between the mobile terminal and one of the base stations which is in communications connection with the antennas in zone Z1 and zone Z2. When transmission occurs e.g. between the mobile terminal and the zone Z2, then the information will be transferred to a central server which performs identification of the mobile terminal together with the Bluetooth address which the base station connected to Z2 has. This is tantamount to storing information in a zone register that the transmission has taken place in the zone Z2. This information is compared to whether the system previosuly had similar information, i.e. whether the system had previously stored that the person was present within the antenna zone Z2. If this is the case, the system will keep its information, and this will thus also be the case even if the person leaves Z2 outside the room 1. If, however, communication is to be established with zone Z1, which is not equal to the old zone Z2, then the system will assume that the person is now present inside the room 1, so that the server saves the zone 1 and the addresses of the Bluetooth base station communicate with the mobile terminal. The person may then move freely about in the room 1, and for the greater part of the time his mobile unit will have no communication with the system, which nevertheless knows exactly where he is present.

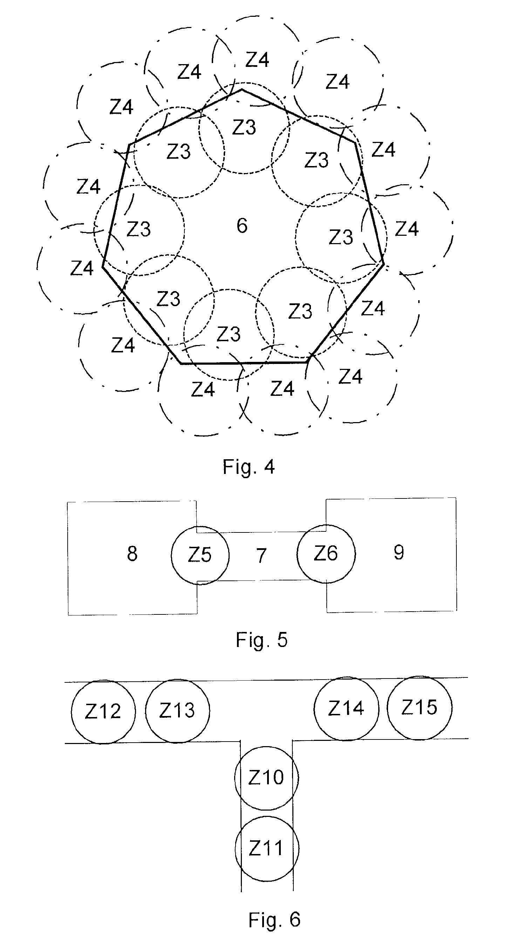

Figure 4 shows another use of the invention, which may also be applied e.g. in a very large conference room in which several different antenna zones may be arranged. For example, an antenna coverage zone Z3 enclosing an internal area 6 may be established by means of a plurality of antennas. A further antenna zone Z4 is arranged around the antenna zone Z3, and with reference to the explanation of figures 2 and 3 it will be appreciated that it can be determined with certainty whether a person with a mobile terminal is present within the zone 6 or not. For example, a large exhibition building may be divided into e.g. four zones by means of the embodiment described in connection with figure 4, thereby making it much easier to find a person when three fourths of the area of the exhibition building can be excluded.

Figure 5 illustrates a further use where the zones Z5 and Z6 are arranged at their respective ends of a corridor 7 that connects two rooms 8 and 9. Thus, it is not necessary that the zones which belong in pairs with a view to the location determination overlap each other. This technique may also be used e.g. in connection with traffic supervision, which is shown schematically in figure 6 which shows a T-road having a cross road with zones 10 and 11 and having zones 12 and 13 and 14 and 15, respectively, at the other roads. It will then be appreciated that the system is very versatile and gives a certain positional determination with a very limited consumption of energy. For example, it is conceivable that the mobile terminal was arranged on a container, and that zones of the present type were established at certain locations on the container terminal where the container crane moves about. Preferably the antenna zones can be established by means of buried leaking cables. The mobile units on the containers are in standby for by far the greatest part of the time, thereby saving power.

Of course, it is possible to combine the invention with other forms of known location determination systems with a view to error finding. If for example it has been established by the system according to the invention that a person with his mobile terminal is present in the area 9, then it may occasionally be checked whether the signal strength for transmission between the mobile terminal and the area Z6 is greater than the signal strength by communication with the area Z5. This can only be done by occasionally increasing the transmission strength of Z5 and Z6. Another example of this extension of the system according to the invention may be to store a table in the server and an associated program, which can check whether location determinations might occur that are not in accordance with the current positional determinations. The described examples of error finding procedures will not be of interest in small systems like whose which have been described so far, but it will be appreciated that the invention may be used in connection with 10, 25 or even more zones that run in extension e.g. over an industrial area so that it may be determined very easily where a person is present with his mobile terminal.

It is well known that in so-called WAP telephones information may be transferred from a server to the mobile telephone, where the latter may be controlled in various ways e.g. for transmitting very strong ringing tones in areas which are known to be noisy by the system, and for just emitting vibrations e.g. when a person participates at a meeting. Fr example, with reference to figure 1, it will be extremely inexpedient if a known positional system was wrong as to whether the person was present on the external or the internal side of the partition wall 3, if there is noise outside, and quietness must prevail inside because of a meeting. In case of an error, the telephone would ring strongly during the meeting. Such "accidents" are avoided by combining the certain location determination according to the invention with a number of facilities involved by the WAP possibilities. Generally the invention results in many advantages not only in connection with WAP but also in connection with any other service offered by GSM and GPRS nets.

## Claims

1. A method for location determination of a mobile terminal by means of radio connections which are controlled by a common server, **characterized by** providing a least one pair of different radio zones closely spaced from each other so that distinct directional information transversely to a boundary between the pair of radio zones is provided upon recording of the movement of the mobile terminal in the zones.

2. A method according to claim 1, **characterized in that** a pair of radio zones comprises a first zone and a second zone, and that information is stored in the server defining that the mobile unit is present on one side of said boundary if the mobile unit is first recorded in the second zone and then in the first zone, and defining that the mobile unit is present on the other side of said boundary if the mobile unit is first recorded in the first zone and then in the second zone.

3. A method according to claims 1-2, **characterized in that** the first zone is substantially within an internal zone of a room and the second zone is substantially with an external zone outside said room, and that information is stored in the server defining that the mobile unit is present either at the internal side or the external side of the boundary between the first and second zones.

4. A method according to claim 1-3, **characterized in that** a first radio zone is extended to surround an internal area, and that a second radio zone surrounds the first radio zone and is positioned within an external area.

5. A method according to claim 4, wherein the internal area is separated from the external area by means of partition walls, **characterized in that** the radio zones are present around the door openings between the internal area and the external area.

6. A method according to claim 2, **characterized in that** the first zone is arranged at one end of a corridor, and that the second zone is arranged at the other end of a corridor, and that information is stored in the server defining that the mobile unit is present outside the one end of the corridor or outside the other end of the corridor.

7. A method according to anyone of the preceding claims, **characterized in that** the server attributes the zone number to a specific area of location in a building based on a table in the server comprising information about walls and doors.

8. A method according to anyone of the preceding claims, **characterized in that** a pair of zones is arranged in a street, and that information is stored in the server defining that the mobile unit is present either at the one side or at the other side of the boundary between the first and second zones of said pair of zones.

9. A method according to anyone of the preceding claims, **characterized in that** a pair of radio zones is arranged in connection with a container terminal, that the individual containers are provided with their respective mobile units, and that information is stored in the server defining that a container is present either at the one side or at the other side of the boundary between a pair of radio zones.

10. A method according to claims 1 - 6, **characterized in that** the radio zones are extended by the use of more antennas.

11. A method according to claims 1-6 in that the radio zones are extended by means of leaking cables.

12. A method according to any one of the preceding claims, **characterized in that** the radio connections are near field connections.

13. A method according to claim 12, **characterized in that** the radio connection is provided in accordance with a Bluetooth protocol.

14. A method according to anyone of the preceding claims, **characterized in that** a plurality of radio zones is provided, and that the server is used for position determination in relation to the stored information on which and in which directions the mobile unit has passed the radio zones.

15. A method according to claim 12, **characterized in that** the server is adapted to subject the position information to fault-finding by means of look-ups in a table containing previous passages of the boundaries between several pairs of radio zones.

16. A method according to claim 15, **characterized in that** the fault-finding is supplemented with information which is generated on the basis of signal strength measurements in the individual radio zones.

17. A method according to anyone of the preceding claims, **characterized in that** the mobile unit is a mobile telephone with a Bluetooth communications channel.

18. A method according to anyone of the preceding claims **characterized in that** a WAP-pushed mobile telephone is used and that configuration information is sent from the server to the mobile telephone.

19. A computer readable medium containing a program for making a computer decide on the location of a mobile terminal communicating on occasion with a number of base stations having respective predefined antenna coverage zones, **characterized in that** the program comprises the steps of
registering a unique mobile terminal number and an identification number of the base station occasionally communicating with the mobile terminal,
comparing the registered data with previously registered data and if the zone number is new then the old zone number is replaced by the new zone number, and
dedicating the zone number to a predetermined area of location.

20. A medium according to claim 17, **characterized in that** the program comprises a table containing information for attributing the zone number to respective areas of location.

21. A medium according to claim 17, **characterized in that** the program is compatible with a server system for WAP communication.
